# EUROPEAN PATENT SPECIFICATION

(11) **EP 1 048 629 B1**
(45) Date of publication and mention of the grant of the patent: **17.02.2010**
(21) Application number: 99940530.1
(22) Date of filing: 27.08.1999
(51) Int. Cl.: C04B 7/60

(54) **DEVICE AND METHOD FOR BYPASSING KILN EXHAUST GAS**
VORRICHTUNG UND VERFAHREN ZUR UMGEHUNG VON OFENABGAS
DISPOSITIF ET PROCEDE DE DERIVATION DES GAZ BRULES D'UN FOUR

(30) Priority: 28.08.1998 JP 24339298
(43) Date of publication of application: 02.11.2000
(73) Proprietor: TAIHEIYO CEMENT CORPORATION, Chiyoda-ku Tokyo 101-8357 (JP)
(72) Inventor: UENO, N., Taiheiyo Cem. Co., Eng.&Tec. Dep., Kumagaya-shi, Saitama 360-0843 (JP); KASAHARA, M., Taiheiyo Cem. Co., Ofunato Plan, Akasaki-cho, Ofunato-shi, Iwate 022-0007 (JP); HARADA, H., Taiheiyo Cem. Co. Eng.&Tec. Dep., Kumagaya-shi, Saitama 360-0843 (JP); SUTOU, K., Taiheiyo Cem. Co., Eng.&Tec. Dep., Chiyoda-ku, Tokyo 101-8357 (JP)
(74) Representative: Hübner, Helmut
(86) International application number: PCT/JP1999/004645
(87) International publication number: WO 2000/012444

(56) References cited:
- EP-A1- 0 808 809
- JP-A- 2 116 649
- JP-A- 9 175 847
- JP-A- 47 012 228
- JP-A- 62 252 350
- US-A- 5 454 715
- US-A- 5 649 823

## Description

### Technical Field

The present invention relates to an apparatus and a method for bypassing kiln exhaust gas and, more particularly, to an apparatus and a method for extracting part of exhaust gas from a kiln using a double pipe-structured probe, cooling and processing it.

### Background Art

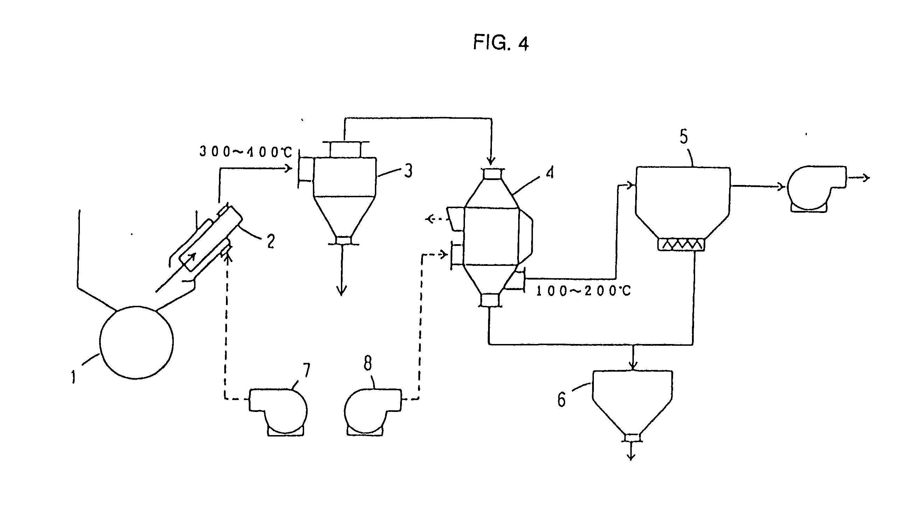

For example, a volatile component such as chlorine derived from a raw material and fuel for the production of cement is concentrated by circulation in a kiln preheater system and prevents the stable operation of a kiln. Then, as means of removing this volatile component from the kiln preheater system, there is known a method of extracting part of the kiln exhaust gas where the volatile component is concentrated in a high concentration to the outside of a system by a bypass. This kiln exhaust gas bypassing system is shown in Fig. 4. Part of exhaust gas of a kiln 1 is extracted and cooled with a probe 2. Since chlorine is particularly contained in fine powder out of dust generated by cooling, dust is separated into coarse powder and fine powder by a separator 3 with a particle size of 5 to 10 µm as a cut-off size, the coarse powder is returned into the kiln system, exhaust gas containing the separated fine powder is cooled by a cooler 4, and the fine powder is collected by a dust collector 5. The collected fine powder having a high chlorine content is stored in a dust tank 6, added to cement or processed outside the system.

A double pipe-structured probe is used as the probe 2 for extracting exhaust gas from the kiln 1. Extracted gas is cooled with cooling air from a cooling fan 7 to 600 to 700°C or less which is the melting point of a chorine compound, generally 300 to 400°C in consideration of temperature conditions for the separator 3 and devices thereafter in the later steps. Further, in consideration of the temperature condition for the dust collector 5 in the later step, the extracted gas is cooled to a temperature of 100 to 200°C with cooling air from a cooling fan 8 in the cooler 4.

However, when an attempt is made to increase the amount of exhaust gas extracted from the kiln 1, that is, bypassing ratio, so as to raise the amount of a volatile component removed, the diameter of the probe 2 must be increased, with the result that there arises a problem in that its installation space can not be ensured.

Since the mixing performance of the extracted exhaust gas and cooling air is reduced by increasing the diameter of the probe 2, it becomes difficult to cool the exhaust gas to a predetermined temperature, resulting in a problem in that the removing efficiency of a volatile component is deteriorated.

Document EP 0 808 809 relates to a kiln exhaus gas processing apparatus in which between the kiln and a separator one colling device is provided. The temperature at the exit of the cooling device is 600 to 700°C.

In document US 5 649 823 a bypass system for a long cement kiln is described in which downstream from a double pipe-structured probe a fan and a kiln dust collection system are provided.

### Disclosure of the Invention

It is an object of the present invention to provide an apparatus and a method for bypassing kiln exhaust gas which can solve the above problems associated with the prior art, and which can cool extracted exhaust gas to a predetermined temperature and process it easily, even if the amount of exhaust gas extracted from a kiln is increased (increasing bypassing ratio) so as to increase the amount of a volatile component to be removed.

The apparatus for bypassing kiln exhaust gas according to the present invention comprises a double pipe-structured probe for extracting part of exhaust gas from a kiln while primary-cooling it to a temperature of 400 to 600°C, a first cooler for secondary-cooling the exhaust gas extracted and cooled with the probe to a temperature of 300 to 400°C, a separator for separating the dust in the exhaust gas secondary-cooled with the first cooler into coarse powder and fine powder and returning the coarse powder into the kiln system, a second cooler for finally cooling the exhaust gas containing fine powder separated with the separator to a temperature of 100 to 200°C, and a dust collector for collecting the fine powder from the exhaust gas cooled with the second cooler.

The method for bypassing kiln exhaust gas according to the present invention comprises extracting part of exhaust gas from a kiln while primary-cooling it to a temperature of 400 to 600°C with a double pipe-structured probe, secondary-cooling the exhaust gas extracted and cooled to a temperature of 300 to 400°C, separating the exhaust gas secondary-cooled into coarse powder and fine powder, and returning the coarse powder into the kiln system while finally cooling the exhaust gas containing fine powder to a temperature of 100 to 200°C and thereafter collecting the fine powder from the exhaust gas.

Part of the exhaust gas from the kiln can be extracted at a rate of 20 to 80 m/s together with air for the primary cooling.

### Brief Description of the Drawings

Fig. 1 is a flowchart of an apparatus for bypassing kiln exhaust gas according to an embodiment of the present invention;
Fig. 2 is a schematic perspective view showing a probe used in the embodiment;
Fig. 3 is a sectional view showing part of the probe used in the embodiment;
Fig. 4 is a flowchart of an apparatus for bypassing kiln exhaust gas of the prior art;
Fig. 5 is a diagram showing the calculation results of exhaust gas cooling performance with respect to various gas suction rates in an inner cylinder, with the abscissa being distance from the tip of a probe; and
Fig. 6 is a diagram showing the calculation results of exhaust gas cooling performance with respect to various gas suction rates in the inner cylinder, with the abscissa being gas retention time.

### Best Mode for carrying out the Invention

An embodiment of the present invention will be described hereinafter with reference to the accompanying drawings.

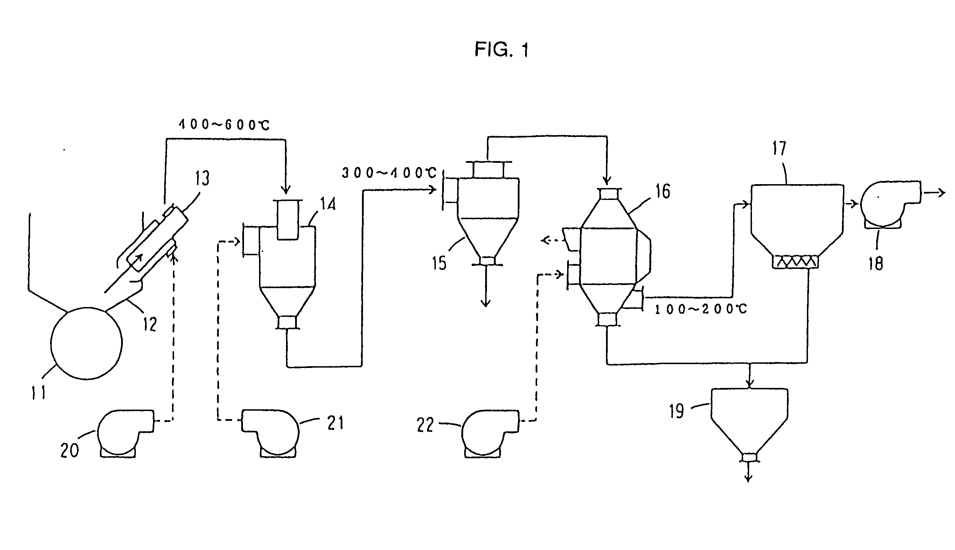

Fig. 1 is a flow diagram of an apparatus for bypassing kiln exhaust gas according to the embodiment of the present invention. The tip of a probe 13 for extracting part of exhaust gas is inserted into a preheater 12 connected to a kiln 11. The probe 13 is connected to a cyclone 15 as a separator through a first cooler 14. Further, the cyclone 15 is connected to a dust collector 17 through a second cooler 16. The dust collector 17 is connected to a suction fan 18 and a dust tank 19. The probe 13, the first cooler 14 and the second cooler 16 are connected to cooling fans 20 to 22, respectively.

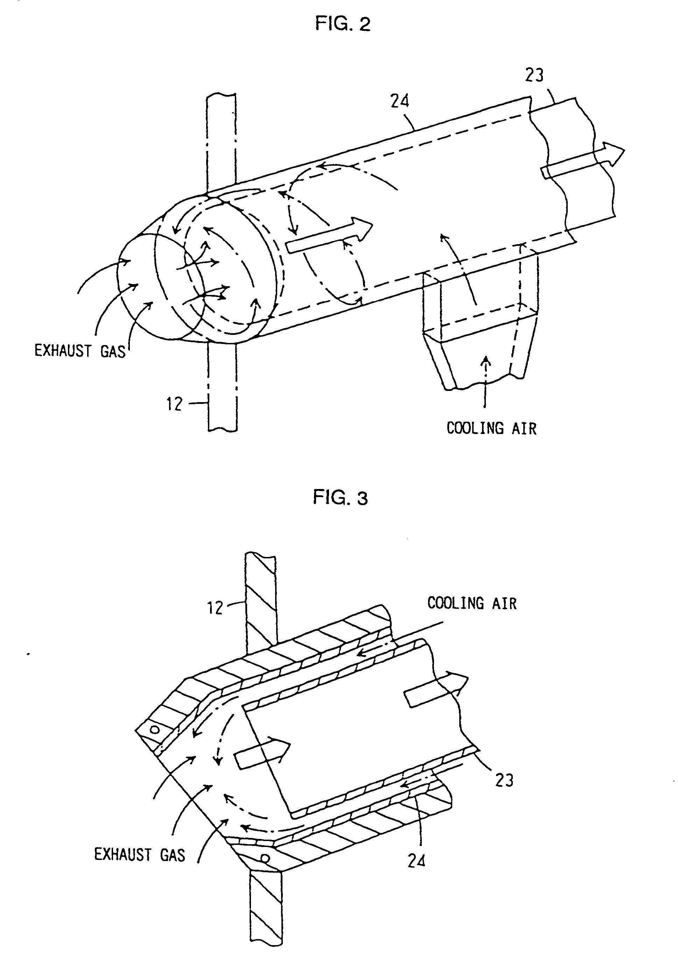

A double pipe-structured probe as disclosed by the present applicant in Japanese Patent Laid-open Publication No.11-035355 can be used as the probe 13. As shown in Figs. 2 and 3, this probe 13 has an inner cylinder 23 and an outer cylinder 24, cooling air supplied from the cooling fan 20 is supplied to the tip of the probe 13 through a cylindrical flow passage formed between the inner cylinder 23 and the outer cylinder 24, and part of exhaust gas from the kiln 11 is mixed with the cooling air to be cooled and extracted through the inner cylinder 23.

A description is subsequently given of the operation of this embodiment. Part of the exhaust gas generated by the operation of the kiln 11 is first extracted from the inner cylinder 23 of the probe 13 by driving the suction fan 18. At this point, cooling air is supplied into the flow passage between the inner cylinder 23 and the outer cylinder 24 from the cooling fan 20, the exhaust gas is mixed with the cooling air at the tip of the probe 13 and primary-cooled to a temperature of 400 to 600°C. The extracted and cooled exhaust gas enters the first cooler 14, is mixed with cooling air from the cooling fan 21 to be secondary-cooled to a temperature of 300 to 400°C, and then enters the cyclone 15. Dust contained in the exhaust gas is separated by the cyclone 15 into coarse powder and fine powder with a particle size of 5 to 10 µm of a cut-off size, and the coarse powder is returned into the kiln system. Meanwhile, the exhaust gas containing separated fine powder is finally cooled to a temperature of 100 to 200°C through heat exchange with cooling air from the cooling fan 22 in the second cooler 16 and enters the dust collector 17. In the dust collector 17, the fine powder dust is collected and stored in the dust tank 19. This fine powder dust has a high content of chlorine and is added to cement or processed outside the system.

In the present invention, the first cooler 14 is installed after the double pipe-structured probe 13, extracted gas subjected to the primary cooling with the probe is subjected to the secondary cooling with the first cooler 14 and supplied to the cyclone 15, and the outlet temperature of the probe 13 can be set to a temperature of 400 to 600°C which is higher than that of the prior art. Further, since the gas suction rate of the inner cylinder 23 of the probe 13 is set to 20 to 80 m/s which is higher than that of the prior art, even when the double pipe-structured probe 13 as big as that of the prior art is used, the amount of exhaust gas extracted from the kiln 11, that is, bypassing ratio can be increased.

Experiments on the extraction and processing of exhaust gas from a cement kiln in operation were conducted using the system of the prior art shown in Fig. 4 and the system of the present invention while actually employing the same double pipe-structured probe. The probe had an inner cylinder of 610 mm in inner diameter and an outer cylinder of 778 mm in inner diameter. The results of the experiments are shown in Table 1.

**Table 1**

| | flow ratio | | | Probe | | | bypassing dust | |
|---|---|---|---|---|---|---|---|---|
| | by passing gas | primary cooling air | secondary cooling air | primary cooling temp (°C) | flow rate of inner cylinder (m/s) | flow rate of outer cylinder (m/s) | concentration of chlorine (%) | generatio n ratio |
| prior art system | 1 | 3.0 | - | 385 | 16 | 10 | 15.0 | 1.0 |
| present invention | 2.7 | 4.5 | 3.6 | 455 | 31 | 15 | 14.5 | 2.8 |

As shown in Table 1, in the system of the present invention, the primary cooling temperature at the outlet of the probe was increased from 385°C of the prior art system to 455°C by almost doubling the gas flow rate of the inner cylinder of the probe from 16 m/s of the prior art system to 31 m/s and the gas flow rate of the outer cylinder from 10 m/s of the prior art system to 15 m/s which was 1.5 times that of the prior art system. By making up for a reduction in the amount of the primary cooling air with the secondary cooling air in the second cooler, the ratio of bypassing gas (extracted gas) to the total amount of cooling air was adjusted to 1:3 which was the same as in the prior art. As the result of the experiments, bypassing gas could be extracted in an amount 2.7 times that of the prior art system using the same probe. The operation condition of the present invention system was stable as in the prior art system, the bypassing dust (fine powder dust) collected by the dust collector showed almost the same concentration of chlorine as the dust of the prior art system, and the amount of dust increased almost in proportion to the amount of bypassing gas. Therefore, it was found that the same chlorine removing efficiency as that of the prior art system was obtained.

In the above embodiment, the cyclone 15 was used as a separator. The present invention is not limited to the cyclone and any device may be used if it has the same separation efficiency.

A cooler for cooling exhaust gas by mixing it with cooling air from the cooling fan 21 is used as the first cooler 14. The present invention is not limited to this cooler and an indirect cooler that exchanges heat between cooling air and exhaust gas may be used. Similarly, an indirect cooler is used as the second cooler 16 but a cooler for cooling exhaust gas by mixing it with cooling air like the first cooler 14 may be used.

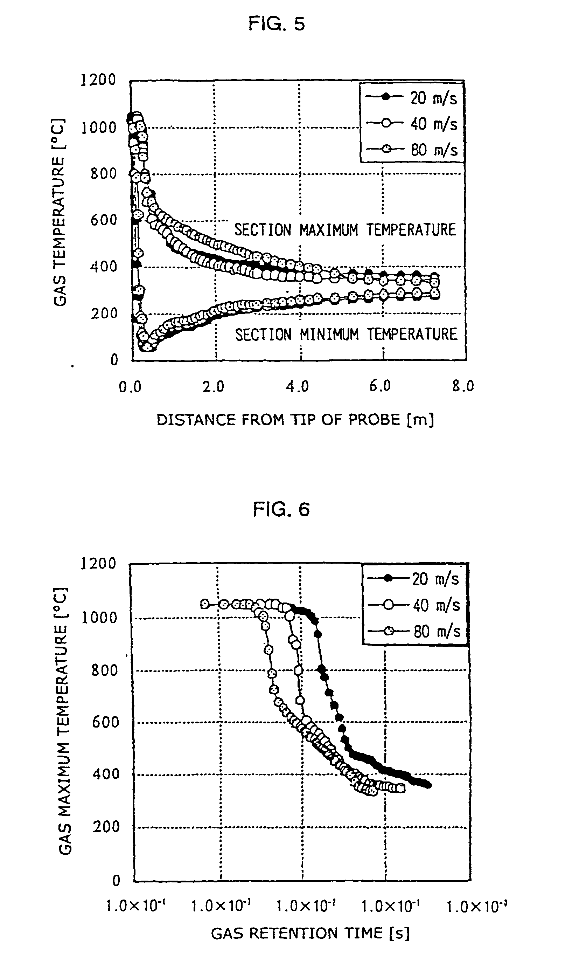

Further, the results of the gas suction rate in the inner cylinder (suction rate of the total amount of kiln exhaust gas extracted and primary cooling air) and exhaust gas cooling performance calculated by computer simulation are shown in Fig. 5 and Fig. 6. Fig. 5 is a diagram showing the comparison results of cooling performance with the abscissa being distance from the tip of a probe. In Fig. 5, when the gas suction rate in the inner cylinder is 80 m/s at a distance from the tip of the probe of 0.5 to 5 m, a slight cooling delay is observed but not a level that causes a problem. Fig. 6 is a diagram showing the comparison results of cooling performance, with the abscissa being gas retention time. In Fig. 6, as the gas suction rate in the inner cylinder increases the cooling rate improves more. As is understood from these results, it is confirmed that the same cooling performance can be obtained at a gas suction rate in the inner cylinder of 20 to 80 m/s.

As having been described above, in the bypassing apparatus and method for removing a volatile component such as chlorine from a kiln preheater, a temperature condition (300 to 400°C) which is required for a separator for separating coarse powder and fine powder and devices after the separator is ensured at the outlet of the probe only by introducing cooling air into the double pipe-structured probe in the prior art whereas a new cooler is provided between the probe and the separator to carry out double-stage cooling and a temperature condition (300 to 400°C) required for the separator and devices after the separator is ensured at the outlet of the cooler in the present invention. Thereby, the temperature of the outlet of the probe can be set higher (400 to 600°C) than that of the prior art and the amount of cooling air introduced into the probe is relatively reduced. Therefore, when the amount of exhaust gas extracted from the kiln and the gas suction rates in the inner cylinder and the outer cylinder of the probe are fixed, the diameter of the probe can be reduced. Also, by increasing the gas suction rate in the inner cylinder, the diameter of the probe can be further reduced. Consequently, even when the amount of exhaust gas extracted from the kiln, that is, bypassing ratio is increased so as to increase the amount of a volatile component removed, the removal of a volatile component such as chlorine can be carried out efficiently without increasing the diameter of the probe excessively or without deteriorating the mixing performance of extracted exhaust gas and cooling air.

## Claims

1. An apparatus for bypassing kiln exhaust gas comprising:
a double pipe-structured probe (13) for extracting part of exhaust gas (23) from a kiln (11) while primary-cooling it to a temperature of 400 to 600°C;
a first cooler (14) for secondary-cooling the exhaust gas extracted and cooled with said probe to a temperature of 300 to 400°C;
a separator (15) for separating the exhaust gas secondary-cooled with said first cooler (14) into coarse powder and fine powder and returning the coarse powder into a kiln system;
a second cooler(16) for finally cooling the exhaust gas containing fine powder separated with said separator to a temperature of 100 to 200°C; and
a dust collector (17) for collecting the fine powder from the exhaust gas cooled with said second cooler (16).

2. The apparatus for bypassing kiln exhaust gas of claim 1 further comprising a suction fan for making said probe extract part of exhaust gas from the kiln (11) at a rate of 20 to 80 m/s together with cooling air for the primary cooling.

3. A method for bypassing kiln exhaust gas comprising the steps of:
extracting part of exhaust gas from a kiln (11) while primary-cooling it to a temperature of 400 to 600°C with a double pipe-structured probe;
secondary-cooling the exhaust gas extracted and cooled to a temperature of 300 to 400°C;
separating the exhaust gas secondary-cooled into coarse powder and fine powder; and
returning the coarse powder into a kiln system while finally cooling the exhaust gas containing fine powder to a temperature of 100 to 200°C and thereafter collecting the fine powder from the exhaust gas.

4. The method for bypassing kiln exhaust gas of claim 3 wherein part of exhaust gas from the kiln (11) is extracted at a rate of 20 to 80 m/s together with cooling air for the primary cooling.

## Patentansprüche

1. Eine Vorrichtung zum Umleiten von Ofen-Abgas, die aufweist:
einen Messfühler (13) mit Doppelrohrstruktur zum Extrahieren von einem Teil des Abgases (23) aus einem Ofen (11), während ein Primärkühlen von diesem auf eine Temperatur von 400 bis 600°C durchgeführt wird,
eine erste Kühleinrichtung (14) zum Sekundärkühlen des Abgases, das mit dem Messfühler extrahiert und gekühlt wurde, auf eine Temperatur von 300 bis 400°C,
eine Trenneinrichtung (15) zum Trennen des Abgases, das mit der ersten Kühleinrichtung (14) sekundärgekühlt wurde, in Grobpulver und Feinpulver und zum Rückführen des Grobpulvers in ein Ofensystem,
eine zweite Kühleinrichtung (16) zum Endkühlen des Abgases mit feinem Pulver, das mit der Trenneinrichtung abgetrennt wurde, auf eine Temperatur von 100 bis 200°C und
eine Staubsammeleinrichtung (17) zum Sammeln des feinen Pulvers aus dem Abgas, das mit der zweiten Kühleinrichtung gekühlt wurde.

2. Die Vorrichtung zum Umleiten von Abgas nach Anspruch 1, die ferner ein Ansauggebläse aufweist, durch das bewirkbar ist, dass der Messfühler einen Teil des Abgases aus dem Ofen (11) mit einer Rate von 20 bis 80 m/s zusammen mit der Kühlluft für das Primärkühlen extrahiert.

3. Ein Verfahren zum Umleiten von Ofenabgas, das die Schritt aufweist:
Extrahieren von einem Teil des Abgases aus einem Ofen (11) während des Primärkühlens von diesem auf eine Temperatur von 400 bis 600 °C mit einem Messfühler mit Doppelrohrstruktur,
Sekundärkühlen des Abgases, das extrahiert und gekühlt wurde, auf eine Temperatur von 300 bis 400°C,
Trennen des Abgases, das sekundärgekühlt wurde, in Grobpulver und Feinpulver und
Rückführen des Grobpulvers in ein Ofensystem, während das Abgas mit dem Feinpulver auf eine Temperatur von 100 bis 200°C endgekühlt wird, und anschließendes Sammeln des Feinpulverpulvers aus dem Abgas.

4. Das Verfahren zum Umleiten von Ofenabgas nach Anspruch 3, wobei ein Teil des Abgases aus dem Ofen (11) mit einer Rate von 20 bis 80 m/s zusammen mit Kühlluft für das Primärkühlen extrahiert wird.

## Revendications

1. Appareil de dérivation des gaz d'échappement brûlés d'un four comprenant:
une sonde structurée en tube double (13) pour extraire une partie des gaz d'échappement (23) d'un four (11) durant un refroidissement primaire de celui-ci à une température de 400 à 600°C;
un premier refroidisseur (14) pour le refroidissement secondaire des gaz d'échappement extraits et refroidis avec ladite sonde à une température de 300 à 400°C;
un séparateur (15) pour séparer les gaz d'échappement après refroidissement secondaire avec ledit premier refroidisseur (14) en une poudre grossière et une poudre fine et pour amener la poudre grossière dans un système de four;
un deuxième refroidisseur (16) destiné au refroidissement final des gaz d'échappement contenant la poudre fine séparée avec ledit séparateur à une température de 100 à 200°C; et
un collecteur de poussière (17) pour collecter la poudre fine des gaz d'échappement refroidis avec ledit deuxième refroidiseur (16).

2. Appareil de dérivation des gaz d'échappement brûlés d'un four selon la revendication 1, comprenant en outre un ventilateur d'aspiration pour amener ladite sonde à extraire une partie des gaz d'échappement du four (11) à une vitesse de 20 à 80 m/s ensemble avec l'air de refroidissement pour le refroidissement primaire.

3. Procédé de dérivation des gaz d'échappement d'un four comprenant les étapes de:
extraire une partie des gaz d'échappement d'un four (11) avec refroidissement primaire de celui-ci à une température de 400 à 600°C avec une sonde structuré en tube double;
refroidissement secondaire des gaz d'échappement extraits et refroidis à une température de 300 à 400°C;
séparation des gaz d'échappement après refroidissement secondaire en poudre grossière et poudre fine; et
ramener la poudre grossière dans un système de four avec refroidissement final des gaz d'échappement contenant la poudre fine à une température de 100 à 200°C et recueillir ensuite la poudre fine des gaz d'échappement.

4. Procédé de dérivation des gaz d'échappement d'un four selon la revendication 3, dans lequel une partie des gaz d'échappement du four (11) est extraite à une vitesse de 20 à 80 m/s ensemble avec l'air de refroidissement pour le refroidissement primaire.
